# EUROPÄISCHE PATENTSCHRIFT

(11) **EP 0 804 825 B1**
(45) Veröffentlichungstag und Bekanntmachung des Hinweises auf die Patenterteilung: **16.09.1998**
(21) Anmeldenummer: 96900254.2
(22) Anmeldetag: 05.01.1996
(51) Int. Cl.: H02G 5/06

(54) **METALLGEKAPSELTE HOCHSPANNUNGSLEITUNG MIT EINER BEFESTIGUNGSVORRICHTUNG FÜR EINEN ISOLIERSTOFFSTÜTZER**
METAL-SHEATHED HIGH-VOLTAGE LINE WITH A SECURING ELEMENT FOR AN INSULATING SUPPORT
LIGNE HAUTE TENSION A BLINDAGE METALLIQUE AVEC UN DISPOSITIF DE FIXATION DESTINE A UN ISOLATEUR

(30) Priorität: 20.01.1995 DE 19502665
(43) Veröffentlichungstag der Anmeldung: 05.11.1997
(73) Patentinhaber: SIEMENS AKTIENGESELLSCHAFT, 80333 München (DE)
(72) Erfinder: LÖBNER, Friedrich, D-10829 Berlin (DE); KELCH, Thomas, D-13465 Berlin (DE); MEINHERZ, Manfred, D-13467 Berlin (DE)
(86) Internationale Anmeldenummer: DE9600013
(87) Internationale Veröffentlichungsnummer: WO9622624

(56) Entgegenhaltungen:
- CH-A- 536 567
- FR-A- 2 194 024
- FR-A- 2 401 497

## Beschreibung

Die Erfindung bezieht sich auf eine metallgekapselte Hochspannungsleitung mit einem Hochspannungsleiter, einer diesen koaxial umgebenden Metallkapselung und mit wenigstens einer Befestigungsvorrichtung für einen scheibenförmigen Isolierstoffstützer, welche einen ersten und einen zweiten, jeweils zu dem Hochspannungsleiter konzentrisch angeordneten Ring mit je einer radial in bezug auf die Längsachse der Hochspannungsleitung vorragenden Steg aufweist, wobei ein Isolierstoffstützer zwischen den Stegen der Ringe festgelegt ist.

Eine derartige Hochspannungsleitung ist beispielsweise aus der US-PS 4,161,621 bekannt.

Dort ist eine Befestigungsvorrichtung für Isolierstoffstützer innerhalb einer Metallkapselung beschrieben, wobei Ringe vorgesehen sind, die an der Metallkapselung anliegen und die Stege tragen, zwischen denen jeweils ein Isolierstoffstützer festgelegt ist.

Der vorliegenden Erfindung liegt demgegenüber die Aufgabe zugrunde, bei einer Hochspannungsleitung der eingangs genannten Art die Konstruktion einfach zu gestalten und die Montage zu erleichtern.

Die Aufgabe wird erfindungsgemäß dadurch gelöst, daß wenigstens einer der Ringe den Hochspannungsleiter unmittelbar umgibt und daß die Ringe in axialer Richtung der Hochspannungsleitung gegeneinander gedrückt werden, wobei wenigstens ein erster Keilkörper vorgesehen ist, der durch die axiale Andruckkraft, die das Gegeneinanderdrücken der Ringe bewirkt, mittels Keilwirkung gegen den Hochspannungsleiter preßbar ist und somit die Befestigungsvorrichtung an dem Hochspannungsleiter festklemmt.

Um insbesondere thermische Dehnungen während des Betriebs der Hochspannungsleitung zu kompensieren, ist es vorteilhaft, wenn die Isolierstoffstützer entweder nur an dem Hochspannungsleiter oder an der Metallkapselung befestigt sind und an dem jeweils anderen Teil gleiten. Die erfindungsgemäße Konstruktion ist insofern vorteilhaft, als nacheinander die Ringe und die Isolierstoffstützer auf den Hochspannungsleiter aufgefädelt werden können und danach die Ringe beispielsweise mittels axialer Schrauben gegeneinander gedrückt werden, um einerseits den jeweiligen Isolierstoffstützer zwischen den Stegen festzulegen und andererseits die Befestigungsvorrichtung durch die Keilwirkung des Keilkörpers an dem Hochspannungsleiter verschiebungsfest zu fixieren.

Diese Montage kann beispielsweise vorgenommen werden, bevor der Hochspannungsleiter in die Metallkapselung eingesetzt wird, es ist jedoch auch möglich, zuerst den Hochspannungsleiter einzusetzen und dann sukzessive die Isolierstoffstützer einzuschieben. Es müssen hierzu keine baulichen Anpassungen oder Bearbeitungen des Hochspannungsleiters vorgenommen werden.

Es kann vorteilhaft vorgesehen sein, daß zwischen dem ersten und dem zweiten Ring ein dritter Ring mit konischer Außenkontur angeordnet ist, auf dem der Isolierstoffstützer festgeklemmt ist.

Dieser dritte Ring zentriert den Isolierstoffstützer relativ zu dem Hochspannungsleiter, soweit dies nicht schon durch die Stege geschieht.

Die Stege können beispielsweise konzentrisch und koaxial zu dem Hochspannungsleiter auf den Ringen umlaufen. Es ist aber auch möglich, auf den Ringen lediglich Stege in Form von einzelnen Erhebungen am äußeren Umfang der Ringe vorzusehen.

Vorteilhaft kann es außerdem vorgesehen sein, daß der dritte Ring mit dem ersten oder dem zweiten Ring einstückig verbunden ist.

Dies erleichtert die Montage der Befestigungsvorrichtung. Die beiden Ringe bzw. die drei Ringe können von axialen Bohrungen durchsetzt sein, die das Zusammendrücken der Ringe in axialer Richtung der Hochspannungsleitung mittels Schrauben erlauben.

Eine weitere vorteilhafte Ausgestaltung der Erfindung sieht vor, daß der Isolierstoffstützer an seinem äußeren Umfang einen Ring trägt, der an der Innenwand der Metallkapselung gleitet.

Durch diese Konstruktion ist gewährleistet, daß eine leicht gleitende Verbindung zwischen dem Isolierstoffstützer und der Metallkapselung besteht.

Der Keilkörper kann als im Querschnitt keilförmiger Ring oder Teilring den Hochspannungsleiter ganz oder teilweise umgeben. Es können auch mehrere Keilkörper am Umfang des Hochspannungsleiters verteilt sein. Es kann jeweils ein erster Keilkörper mit einem zweiten Keilkörper zur Erzielung einer Andruckkraft zusammenwirken.

Im folgenden wird die Erfindung anhand einer Zeichnung gezeigt und nachfolgend beschrieben.

Dabei zeigt
die Figur 1 im Querschnitt schematisch eine Anordnung mit zwei Ringen,
Figur 2 eine Anordnung mit zwei Ringen und einem separaten Keilköper,
Figur 3 eine Anordnung mit zwei Ringen und zwei zusammenwirkenden Keilkörpern.

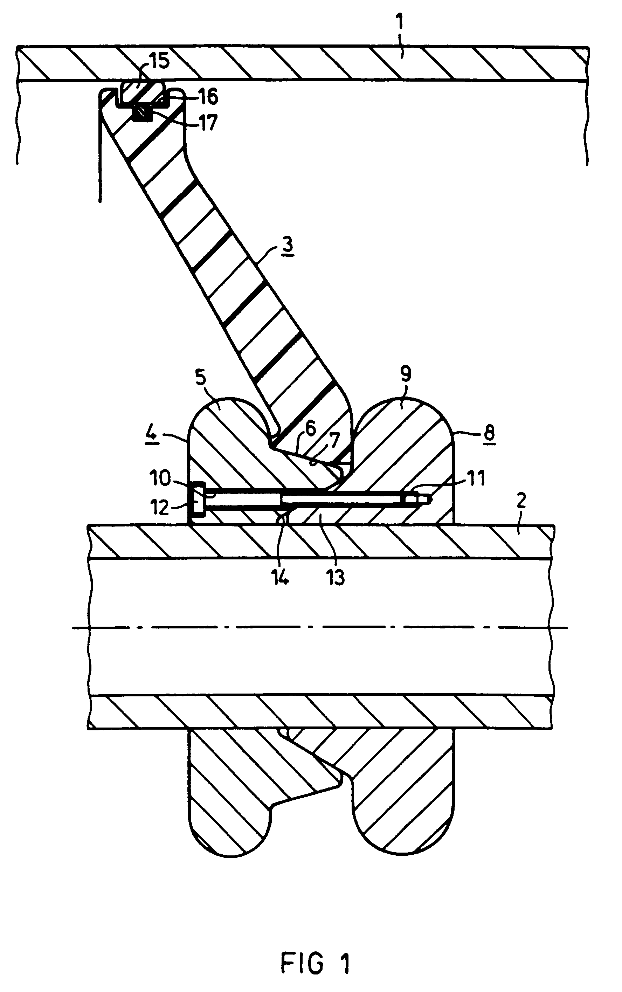

In der Figur 1 ist schematisch ein Teil einer Metallkapselung 1 und eines Hochspannungsleiters 2 dargestellt. Der Hochspannungsleiter 2 ist koaxial innerhalb der zylindrischen Metallkapselung 1 angeordnet und die Mittelachse dieser Anordnung ist strichliniert angedeutet.

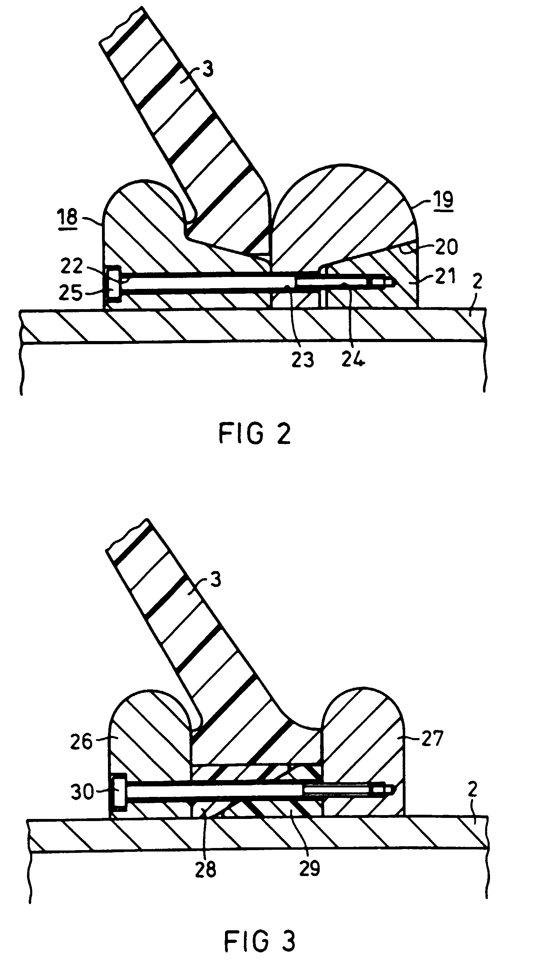

In den Figuren 2 und 3 ist die Metallkapselung 1 jeweils weggelassen und auch der Hochspannungsleiter 2 ist jeweils nur teilweise dargestellt.

In der Figur 1 ist ein scheibenförmiger, konisch ausgebildeter Isolierstoffstützer 3 dargestellt, der den Hochspannungsleiter 2 innerhalb der Metallkapselung 1 konzentrisch und koaxial abstützt.

Zu diesem Zweck ist auf den Hochspannungsleiter 2 ein erster, zu diesem konzentrisch angeordneter Ring 4 aufgeschoben, der einen koaxial zu dem Hochspannungsleiter 2 umlaufenden Steg 5 an seinem äußeren Umfang aufweist.

Der Ring 4 weist außerdem eine konisch ausgebildete Fläche 6 auf, auf die der Isolierstoffstützer 3 mit einer gegensinnig konisch ausgebildeten Fläche 7 aufgeschoben ist. Auf diese Weise ist der Isolierstoffstützer 3 auf dem Ring 4 festgeklemmt.

Der Steg 5 bildet zusätzlich einen Anschlag in axialer Richtung für den Isolierstoffstützer 3.

Auf der dem ersten Ring 4 gegenüberliegenden Seite des Isolierstoffstützer 3 ist ein zweiter Ring 8 vorgesehen, der einen als Wulst ausgebildeten umlaufenden Steg 9 an seinem Umfang aufweist.

Die beiden Ringe 4, 8 sind von fluchtenden Bohrungen 10, 11 durchsetzt, durch die eine Schraube 12 hindurchragt, mittels der die beiden Ringe 4, 8 in axialer Richtung zusammengedrückt werden. Dadurch kann der Isolierstoffstützer 3 zwischen den Stegen 5, 9 der Ringe 4, 8 in axialer Richtung festgelegt werden.

Mit dem zweiten Ring 8 ist ein Keilkorper 13 einstückig verbunden, der den Hochspannungsleiter 2 ringförmig umgibt. Der Keilkörper 13 wirkt mit einer konischen Fläche 14 des ersten Ringes 4 derart zusammen, daß beim Annähern der Ringe 4, 8 aneinander der Keilkörper 13 gegen den Hochspannungsleiter 2 gedrückt wird und somit beide Ringe 4, 8 durch die Haftreibung an dem Hochspannungsleiter 2 festgeklemmt werden. Gleichzeitig wird hierdurch auch der Isolierstoffstützer 3, der zwischen den Ringen 4, 8 festgelegt ist, an dem Hochspannungsleiter 2 befestigt.

Der Isolierstoffstützer 3 trägt an seinem äußeren Umfang in einer umlaufenden Nut 16 einen PTFE-Ring 15, der an der Innenwand der Metallkapselung 1 gleitet. Der Ring 15 kann beispielsweise geteilt sein und durch einen in der Nut 16 liegenden Gummiring 17 gegen die Innenwand der Metallkapselung 1 gedrückt werden. Hierdurch ist gewährleistet, daß der Ring 15 ständig in Verbindung zu der Metallkapselung 1 steht. Der Ring 15 kann auch als metallisch gefüllter, leitender Kunststoffkörper und vorteilhaft als Feldsteuerelektrode ausgebildet sein.

Der umlaufende Keilkörper 13 kann zur besseren Verformbarkeit radial verlaufende Schlitze aufweisen.

In der Figur 2 ist der Isolierstoffstützer 3 zwischen den Ringen 18, 19 festgelegt. Der zweite Ring 19 weist eine konische Fläche 20 auf, die dem Hochspannungsleiter 2 zugewandt ist und mit der ein separater Keilkörper 21 zusammenwirkt. Der Keilkörper 21 kann ebenso wie die Ringe 18, 19 am Umfang des Hochspannungsleiters 2 umlaufend ausgebildet sein. Es könnte jedoch auch vorgesehen sein, den Keilkörper 21 in mehrere Teilkreisringe mit keilförmigem Querschnitt aufzuteilen. Dadurch muß beim Andrücken der Keilkörper 21 an die Oberfläche des Hochspannungsleiters 2 keine Kraft gegen die Eigenstabilität eines durchgehenden ringförmigen Keilkörpers aufgebracht werden.

Sowohl die Ringe 4, 8, 18, 19 als auch die Keilkörper 13, 21 können aus Metall bestehen. Die wulstförmig ausgebildeten Stege 5, 9 der Ringe wirken dann neben ihrer Befestigungsfunktion auch als Feldsteuerelektroden zur Steuerung des Hochspannungspotentials. Bei einer solchen Ausbildung sind dann die wulstförmig gerundeten Teile der Ringe als Stege anzusehen. Insbesondere die Keilkörper 13, 21 können jedoch auch als leicht deformierbare Isolierstoffkörper, beispielsweise aus PTFE hergestellt sein, wenn dies dielektrisch vertretbar ist. Dies ist beispielsweise auch dadurch zu gewährleisten, daß der Isolierstoff mit einem leitenden, fein verteilten Material gefüllt ist, um eine bestimmte Mindestleitfähigkeit zu erzeugen.

Die Ringe 18, 19 und der Keilkörper 21 weisen fluchtende Bohrungen 22, 23, 24 auf, die von Schrauben 25 durchsetzt sind, wodurch die Ringe axial gegeneinander drückbar sind, so daß durch die Keilwirkung zwischen der Fläche 20 des Rings 19 und dem Keilkörper 21 eine radiale Anpreßkraft auf den Keilkörper 21 wirkt, die diesen und somit die gesamte Befestigungsvorrichtung auf dem Hochspannungsleiter 2 festklemmt.

Bei der in der Figur 3 dargestellten Anordnung sind zwei Ringe 26, 27 vorgesehen, zwischen denen zwei ringförmig den Hochspannungsleiter 2 umgebende Keilkörper 28, 29 festgelegt sind.

Auf den Keilkörpern 28, 29 liegt der Isolierstoffstützer 3 spielfrei auf.

Der Keilkörper 29 weist eine radial in bezug auf den Hochspannungsleiter 2 nach außen weisende Keilfläche, der Keilkörper 28 eine entsprechend nach innen weisende konische Fläche auf, wobei die konischen Flächen zur Erzeugung einer Keilwirkung zusammenwirken.

Zu diesem Zweck sind die Ringe 26, 27 und die Keilkörper 28, 29 von fluchtendem Bohrungen durchsetzt, die eine Schraube 30 zur Erzeugung einer axialen Druckkraft aufnehmen. Bei dieser Anordnung ist es beispielsweise möglich, die Ringe 26, 27 aus Metall herzustellen und auch als Feldsteuerelektroden auszubilden und die Keilkörper 28, 29 ohne Gefährdung der dielektrischen Sicherheit aus einem Isolierstoff herzustellen.

## Patentansprüche

1. Metallgekapselte Hochspannungsleitung mit einem Hochspannungsleiter (2), einer diesen koaxial umgebenden Metallkapselung (1) und mit wenigstens einer Befestigungsvorrichtung für einen scheibenförmigen Isolierstoffstützer (3), welche einen ersten und einen zweiten, jeweils zu dem Hochspannungsleiter (2) konzentrisch angeordneten Ring (4, 8, 18, 19, 26) mit je einem radial in bezug auf die Längsachse der Hochspannungsleitung vorragenden Steg (5, 9) aufweist, wobei ein Isolierstoffstützer (3) zwischen den Stegen (5, 9) der Ringe (4, 8, 18, 19, 26) festgelegt ist,
**dadurch gekennzeichnet,** daß
wenigstens einer der Ringe (4, 8, 18, 19, 26) den Hochspannungsleiter (2) unmittelbar umgibt und daß die Ringe (4, 8, 18, 19, 26) in axialer Richtung der Hochspannungsleitung gegeneinander gedrückt werden, wobei wenigstens ein erster Keilkörper (13, 21, 29) vorgesehen ist, der durch die axiale Andruckkraft, die das Gegeneinanderdrücken der Ringe (4, 8, 18, 19, 26) bewirkt, mittels Keilwirkung gegen den Hochspannungsleiter (2) preßbar ist und somit die Befestigungsvorrichtung an dem Hochspannungsleiter (2) festklemmt.

2. Metallgekapselte Hochspannungsleitung nach Anspruch 1,
**dadurch gekennzeichnet,** daß
zwischen dem ersten und dem zweiten Ring (4, 8, 18, 19, 26) ein dritter Ring (13, 29) mit konischer Außenkontur angeordnet ist, auf dem der Isolierstoffstützer (3) festgeklemmt ist.

3. Metallgekapselte Hochspannungsleitung nach Anspruch 2,
**dadurch gekennzeichnet,** daß
der dritte Ring (13, 29) mit dem ersten oder dem zweiten Ring (4, 8, 18, 19, 26) einstückig verbunden ist.

4. Metallgekapselte Hochspannungsleitung nach Anspruch 1 oder einem der folgenden,
**dadurch gekennzeichnet,** daß
der Isolierstoffstützer (3) an seinem äußeren Umfang einen Ring (15) trägt, der an der Innenwand der Metallkapselung gleitet.

5. Metallgekapselte Hochspannungsleitung nach Anspruch 1 oder einem der folgenden,
**dadurch gekennzeichnet,** daß
der erste Keilkörper (29) mit einem zweiten Keilkörper (28) zur Erzielung einer radialen Andruckkraft an den Hochspannunsleiter (2) zusammenwirkt.

6. Metallgekapselte Hochspannunsleitung nach Anspruch 1 oder einem der folgenden,
**dadurch gekennzeichnet,** daß
der erste (29) und insbesondere auch der zweite Keilkörper (28) in Axialrichtung der Hochspannungsleitung zwischen dem ersten (26) und dem zweiten Ring (27) angeordnet ist.

7. Metallgekapselte Hochspannungsleitung nach Anspruch 1 oder einem der folgenden,
**dadurch gekennzeichnet,** daß
der erste und/oder der zweite Keilkörper (13, 21, 28, 29) mit einem der Ringe (4, 8, 18, 19, 26) einstückig verbunden ist.

8. Metallgekapselte Hochspannungsleitung nach Anspruch 1 oder einem der folgenden,
**dadurch gekennzeichnet,** daß
der erste Keilkörper (13, 21, 29) von axial verlaufenden Schrauben (12, 25, 30) durchsetzt ist, die auch den ersten und zweiten Ring (4, 8, 18, 19, 26) durchsetzen.

## Claims

1. High voltage metal-sheathed line with a high voltage conductor (2), a metal sheath (1) coaxially surrounding it and with at least one fastener for a disc-shaped insulator (3) comprising a first and second ring (4, 8, 18, 19, 26) each arranged concentrically to the high voltage conductor (2) with a respective rib (5, 9) projecting radially with respect to the longitudinal axis of the high voltage line, an insulator (3) being fixed between the ribs (5, 9) of the rings (4, 8, 18, 19, 26), characterized in that at least one of the rings (4, 8, 18, 19, 26) directly surrounds the high voltage conductor (2) and in that the rings (4, 8, 18, 19, 26) are pressed against one another in the axial direction of the high voltage line, at least one first wedge member (13, 21, 29) being provided which can be pressed by wedge action against the high voltage conductor (2) by the axial pressing force causing the rings (4, 8, 18, 19, 26) to be pressed against one another, and therefore secures the fastener on the high voltage conductor (2).

2. High voltage metal-sheathed line according to Claim 1, characterized in that, between the first and second ring (4, 8, 18, 19, 26) there is arranged a third ring (13, 29) with a conical external contour on which the insulator (3) is secured.

3. High voltage metal-sheathed line according to Claim 2, characterized in that the third ring (13, 29) is integrally connected to the first or second ring (4, 8, 18, 19, 26).

4. High voltage metal-sheathed line according to Claim 1 or one of the following claims, characterized in that the insulator (3) carries, at its outer periphery, a ring (15) which slides on the internal wall of the metal sheath.

5. High voltage metal-sheathed line according to Claim 1 or one of the following claims, characterized in that the first wedge member (29) cooperates with a second wedge member (28) for achieving a radial pressing force against the high voltage conductor (2).

6. High voltage metal-sheathed line according to Claim 1 or one of the following claims, characterized in that the first wedge member (29) and in particular also the second wedge member (28) is arranged in the axial direction of the high voltage line between the first ring (26) and the second ring (27).

7. High voltage metal-sheathed line according to Claim 1 or one of the following claims, characterized in that the first and/or second wedge member (13, 21, 28, 29) is integrally connected to one of the rings (4, 8, 18, 19, 26).

8. High voltage metal-sheathed line according to Claim 1 or one of the following claims, characterized in that the first wedge member (13, 21, 29) is penetrated by axially extending screws (12, 25, 30) which also penetrate the first and second ring (4, 8, 18, 19, 26).

## Revendications

1. Ligne haute tension à blindage métallique, comportant un conducteur (2) haute tension, un blindage (1) métallique entourant coaxialement ce conducteur et comportant au moins un dispositif de fixation pour un support (3) isolant en forme de disque, qui comporte une première et une deuxième bague (4,8,18,19,26) montée chacune concentriquement au conducteur (2) haute tension et comportant chacune une barrette (5,9) faisant saillie radialement par rapport à l'axe longitudinal de la ligne haute tension, un support (3) isolant étant fixé entre les barrettes (5,9) des bagues (4,8,18,19,26), caractérisée en ce qu'au moins l'une des bagues (4,8,18,19,26) entoure directement le conducteur (2) haute tension et en ce que les bagues (4,8,18,19,26) sont pressées les unes contre les autres dans la direction axiale de la ligne haute tension, au moins un premier élément (13, 21,29) de calage étant prévu, qui, par la force axiale d'application de pression qui provoque le serrage des bagues (4,8,18,19,26) les unes contre les autres, peut, au moyen de l'effet de calage, être pressé sur le conducteur (2) haute tension et bloque donc le dispositif de fixation sur le conducteur (2) haute tension.

2. Ligne haute tension à blindage métallique suivant la revendication 1, caractérisée en ce qu'il est monté entre la première et la deuxième bague (4,8,18,19,26) une troisième bague (13,29) qui a un contour extérieur conique et sur laquelle le support (3) en matériau isolant peut être bloqué.

3. Ligne haute tension à blindage métallique suivant la revendication 2, caractérisée en ce que la troisième bague (13,29) est reliée d'un seul tenant à la première ou à la deuxième bague (4,8,18,19,26).

4. Ligne haute tension à blindage métallique suivant la revendication 1 ou l'une des suivantes, caractérisée en ce que le support (3) isolant porte sur son pourtour extérieur une bague (15) qui glisse sur la paroi intérieure du blindage métallique.

5. Ligne haute tension à blindage métallique suivant la revendication 1 ou l'une des suivantes, caractérisée en ce que le premier élément (29) de calage coopère avec un deuxième élément (28) de calage pour obtenir une force d'application d'une pression radiale sur le conducteur (2) haute tension.

6. Ligne haute tension à blindage métallique suivant la revendication 1 ou l'un des suivantes, caractérisée en ce que le premier élément (29) de calage et notamment aussi le deuxième élément (28) de calage sont montés dans la direction axiale de la ligne haute tension, entre la première bague (26) et la deuxième bague (27).

7. Ligne à haute tension à blindage métallique suivant la revendication 1 ou l'une des suivantes, caractérisée en ce que le premier et/ou le deuxième élément (13,21,28,29) de calage est relié d'un seul tenant à l'une des bagues (4,8,18,19,26).

8. Ligne haute tension à blindage métallique suivant la revendication 1 ou l'une des suivantes, caractérisée en ce que le premier élément (13,21,29) de calage est traversé par des vis (12,25,30) qui s'étendent axialement et qui traversent aussi la première et la deuxième bague (4,8,18,19,26).
